(19) Europäisches Patentamt
European Patent Office
Office européen des brevets

(11) EP 2 056 193 A1

(12) **EUROPEAN PATENT APPLICATION**

(43) Date of publication:
**06.05.2009 Bulletin 2009/19**

(51) Int Cl.:
***G06F 7/72*** *(2006.01)*

(21) Application number: **08168129.8**

(22) Date of filing: **31.10.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **31.10.2007 EP 07119811**

(71) Applicant: **Research In Motion Limited**
**Waterloo, Ontario N2L 3W8 (CA)**

(72) Inventor: **Ebeid, Nevine Maurice Nassif**
**Kitchener**
**Ontario N2A 4C4 (CA)**

(74) Representative: **Rickard, David John et al**
**Ipulse**
**26 Mallinson Road**
**London**
**SW11 1BP (GB)**

(54) **Modular squaring in binary field arithmetic**

(57) After squaring an element of a binary field, the squaring result may be reduced modulo the field-defining polynomial g bits at a time. To this end, a lookup table may be employed, where the lookup table stores entries corresponding to reducing g-bit-long polynomials modulo the field-defining polynomial. Such a reducing strategy may be shown to be more efficient than a bit-by-bit reducing strategy.

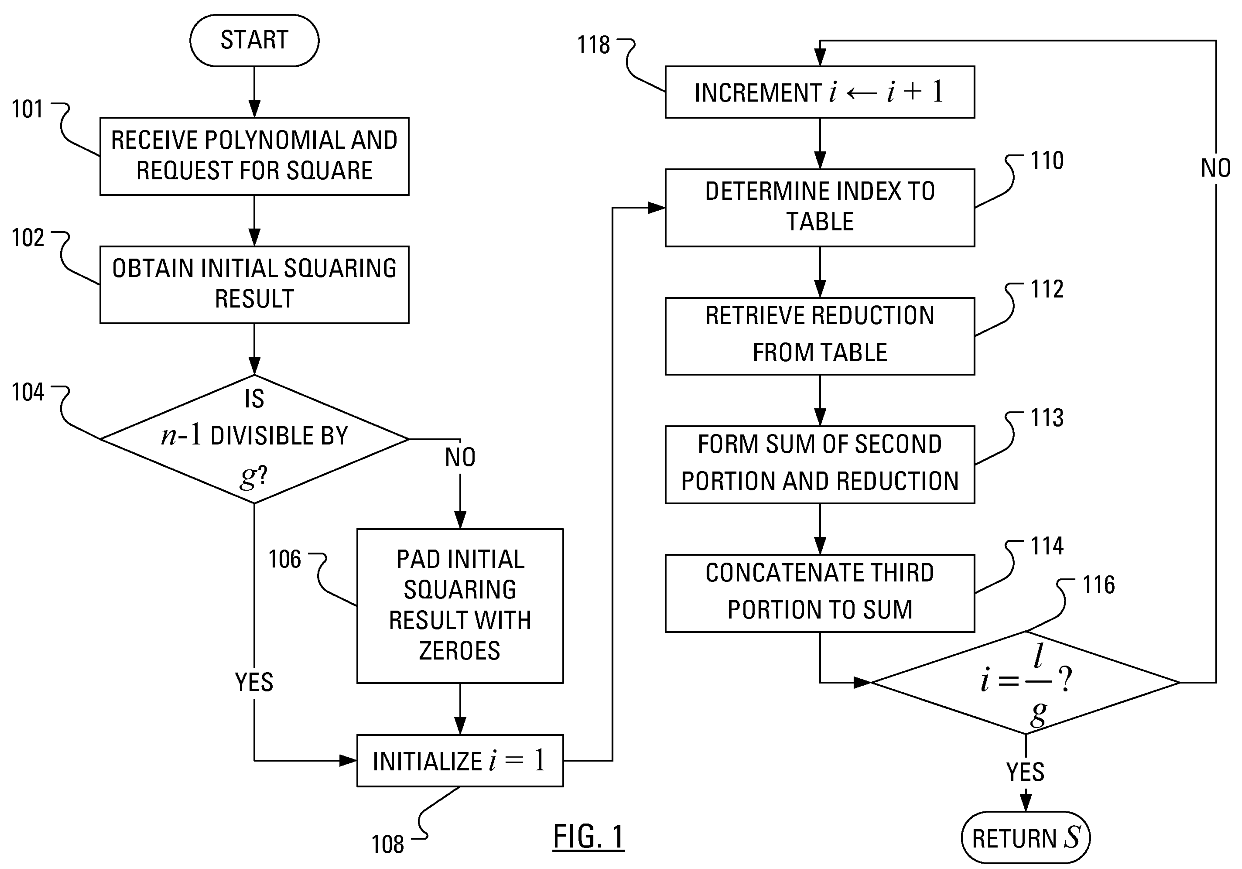


FIG. 1

EP 2 056 193 A1

## Description

The present application relates generally to cryptography and, more specifically, to modular squaring in binary field arithmetic.

Cryptography is the study of mathematical techniques that provide the base of secure communication in the presence of malicious adversaries. The main goals of secure communication include confidentiality of data, integrity of data and authentication of entities involved in a transaction. Historically, "symmetric key" cryptography was used to attempt to meet the goals of secure communication. However, symmetric key cryptography involves entities exchanging secret keys through a secret channel prior to communication. One weakness of symmetric key cryptography is the security of the secret channel. Public key cryptography provides a means of securing a communication between two entities without requiring the two entities to exchange secret keys through a secret channel prior to the communication. An example entity "A" selects a pair of keys: a private key that is only known to entity A and is kept secret; and a public key that is known to the public. If an example entity "B" would like to send a secure message to entity A, then entity B needs to obtain an authentic copy of entity A's public key. Entity B encrypts a message intended for entity A by using entity A's public key. Accordingly, only entity A can decrypt the message from entity B.

For secure communication, entity A selects the pair of keys such that it is computationally infeasible to compute the private key given knowledge of the public key. This condition is achieved by the difficulty (technically known as "hardness") of known mathematical problems such as the known integer factorization mathematical problem, on which is based the known RSA algorithm, which was publicly described in 1977 by Ron Rivest, Adi Shamir and Leonard Adleman.

Elliptic curve cryptography is an approach to public key cryptography based on the algebraic structure of elliptic curves over finite mathematical fields. An elliptic curve over a finite field, *K,* may be defined by a Weierstrass equation of the form

$$y^2 + a_1xy + a_3y = x^3 + a_2x^2 + a_4x + a_6 . \qquad (1.1)$$

If $K = F_p$, where $p$ is greater than three and is a prime, equation (1.1) can be simplified to

$$y^2 = x^3 + ax + b . \qquad (1.2)$$

If $K = F_{2^m}$, i.e., the elliptic curve is defined over a binary field, equation (1.1) can be simplified to

$$y^2 + xy = x^3 + ax^2 + b . \qquad (1.3)$$

The set of points on such a curve (i.e., all solutions of the equation together with a point at infinity) can be shown to form an abelian group (with the point at infinity as the identity element). If the coordinates x and y are chosen from a large finite field, the solutions form a finite abelian group.

Elliptic curve cryptosystems rely on the hardness of a problem called the Elliptic Curve Discrete Logarithm Problem (ECDLP). Where P is a point on an elliptic curve E and where the coordinates of P belong to a finite field, the scalar multiplication *kP,* where *k* is a secret integer, gives a point *Q* equivalent to adding the point *P* to itself *k* times. It is computationally infeasible, for large finite fields, to compute *k* knowing P and *Q.* The ECDLP is: find *k* given *P* and *Q* (=*kP*).

In binary field arithmetic, there is a polynomial *f*(*x*) that defines the field. The field-defining polynomial has to be an irreducible polynomial that has the following form

$$f(x) = x^n + f_{n-1}x^{n-1} + f_{n-2}x^{n-2} + \cdots + f_1x + 1, \qquad (1.4)$$

where each $f_i$ belongs to {0, 1}.

An element of the binary field also has a polynomial representation.

The multiplication of two elements of the binary field is performed modulo a field-defining polynomial. Accordingly, the squaring of an element, that is, the multiplication of an element by itself, is also performed modulo the field-defining polynomial.

GENERAL

The reduction of the result of a squaring operation in binary fields is performed efficiently by using a table of precomputed values (computed based on the field polynomial) in the reduction of the squaring result, since this is more efficient than reducing the squaring result one bit at a time.

In accordance with an aspect of the present application there is provided a computer implemented method of obtaining a modular product of a *n*-bit polynomial and itself in a field defined by a field polynomial. The method comprises receiving, from a requester, the *n*-bit polynomial and a request for a square of the *n*-bit polynomial and representing a squaring result of the *n*-bit polynomial as a (2*n*-1)-bit polynomial having: a first portion that is the most significant g bits of the squaring result; a second portion that is the next most significant *n* bits of the squaring result after the most significant g bits; and a third portion that is the remaining bits of the squaring result after removal of the first portion and the second portion. The method further comprises reducing the first portion modulo the field polynomial, thereby producing a (*g* + *d*)-bit reduction, where *d* is the second highest degree of the field polynomial. The method further comprises forming a sum of the reduction and the second portion with least significant bits aligned and assigning, to the squaring result, a concatenation of the third portion to the sum, repeating the representing, the reducing, the forming and the assigning until the squaring result has a length of *n* bits, and returning the squaring result. In other aspects of the present application, a mobile communication device is provided for carrying out this method and a computer readable medium is provided for adapting a processor to carry out this method.

The method may further comprise defining a table of reductions of g-bit-long polynomials modulo said field polynomial.

The reducing may comprise performing a look-up in said table with said first portion of said squaring result as an index.

The method may further comprise padding said (2*n*-1)-bit squaring result polynomial with *g*-(*n*-1)mod g zeros on the left.

The method may further comprise selecting g such that a word size, w, of a processor carrying out said method is an integer multiple of g.

Other aspects and features of the present invention will become apparent to those of ordinary skill in the art upon review of the following description of specific embodiments of the invention in conjunction with the accompanying figures.

BRIEF DESCRIPTION OF THE DRAWINGS

Reference will now be made to the drawings, which show by way of example, embodiments of the invention, and in which:

FIG. 1 illustrates steps in an example method of squaring an element of a binary field according to one embodiment;

FIG. 2 illustrates a squaring result;

FIG. 3 illustrates a representation of an addition operation;

FIG. 4 illustrates a representation of a concatenation operation; and

FIG. 5 illustrates an apparatus for carrying out the method of FIG. 1.

DESCRIPTION OF PREFERRED EMBODIMENTS

M. Anwarul Hasan, "Look-Up Table-Based Large Finite Field Multiplication in Memory Constrained Cryptosystems", IEEE Transactions on Computers, vol. 49 no. 7, July 2000 (hereinafter "Hasan") presents a binary field multiplication method in which a first look-up table of precomputed values is determined based on the field polynomial. An entry of that look-up table is indexed by a g-bit word w and contains the polynomial resulting from reducing a polynomial represented by $wx^n$ modulo the field polynomial. The look-up table is used in the reduction of the multiplication result simultaneously while the multiplication is performed.

Hasan is concerned with determining

$$P(x) = A(x)B(x) \bmod f(x). \quad (1.5)$$

To this end, Hasan defines

$$e = \sum_{i=1}^{g-1} e_i 2^i \qquad (1.6)$$

to be an integer in the range [0, $2^g$ - 1]. The contents of the eth entry of the first look-up table, M, are

$$M[e] = \left( \sum_{i=0}^{g-1} e_i x^i \right) x^n \bmod f(x). \qquad (1.7)$$

Hasan also defines a second look-up table, T. The contents of the eth entry of the second look-up table are

$$T[e] = \left( \sum_{i=0}^{g-1} e_i x^i \right) A(x) \bmod f(x). \qquad (1.8)$$

With the tables defined, Hasan presents an Algorithm "3" that takes, as input, a first factor A (x), a second factor B(x), a polynomial $f(x)$ that defines the field, and the first table M. The $n$ coefficient bits of B(x) are divided into $s$ groups of $g \geq 2$ bits each. We can call the $s$ groups $B_{s-1}(x)$, $B_{s-2}(x)$,..., $B_1(x)$, $B_0(x)$. Hasan refers to other work in the area for which a processor's resources are best utilized when g is equal to the word size, w, of the processor. However, when g = w for a 32-bit processor, there is a requirement for a table with a size of $2^{37}$ Gigabytes, which is impractically large. A smaller value of g leads to a reduced table size with a penalty of lower utilization of processor resources. For the algorithms in Hasan, the author suggests a much smaller g. For convenience of implementation, a g that divides w evenly is preferred. That is, g is selected so that the word size, w, is an integer multiple of g. The Algorithm "3" provides, as output, a modular product P(x) = $A(x)B(x) \bmod f(x)$. The initial step of the Hasan Algorithm is the generation of the second table. An entry in the second table indexed by a group of coefficient bits of the second factor initializes the product, P(x) := $T[B_{s-1}$ (x = 2)]. For (s - 1) iterations, $k$ = ($s$ - 2) to 0, the product is assigned a sum of three terms: a first term, $\tau_1$; a second term, $\tau_2$; and a third term $\tau_3$.

The first term,

$$\tau_1 := x^g \sum_{i=0}^{n-1-g} p_i x^i \,, \qquad (1.9)$$

is representative of a shift left by g bits of the least significant $n$ - g coefficients of the product of the previous iteration. The second term,

$$\tau_2 := M\left[ P_{s-1}(x=2) \right], \qquad (1.10)$$

depends on the g most significant bits of the product of the previous iteration. As the second term does not depend on either factors in the multiplication operation, the second term may be determined from a table lookup in the first table, M. The third term,

$$\tau_3 := T\left[ B_k(x=2) \right], \qquad (1.11)$$

relies on a table lookup in a table, $T$, that stores

$$B_k(x)A(x) \bmod f(x) \qquad (1.12)$$

for all possible $B_k(x)$.

Once the three terms have been determined, the sum

$$P(x) := \tau_1 + \tau_2 + \tau_3 \qquad (1.13)$$

provides the product for the current iteration.

It has been recognized that a modular squaring operation in binary fields is more straightforward than a modular multiplication operation, since both factors are the same.

According to Darrel Hankerson, Julio López Hernandez, Alfred Menezes, "Software Implementation of Elliptic Curve Cryptography over Binary Fields", CHES 2000, LNCS 1965, p. 243-267 (hereinafter "Hankerson"), squaring a polynomial is much faster than multiplying two arbitrary polynomials since squaring is a linear operation in $F_{2^m}$; that is, if $a(x)=\sum_{i=0}^{n-1} a_i x^i$, then $a(x)^2=\sum_{i=0}^{n-1} a_i x^{2i}$. The binary representation of $a(x)^2$ is obtained by inserting a 0 between consecutive bits of the binary representation of $a(x)$. Notably, once the binary representation of $a(x)^2$ has been obtained by inserting a 0 between consecutive bits of the binary representation of $a(x)$, the resulting polynomial $a(x)^2$ is to be reduced modulo $f(x)$. If the length of $a(x)$ is $n$ bits, then length of the squaring result $a(x)^2$ will be $2n$ - 1 bits, with the most significant bit at position 2n - 2. Note that the bit at position 2n - 1 will be a zero.

Hankerson suggests reducing the squaring result one bit at a time.

In overview, it is suggested herein to reduce the squaring result g bits at a time. To this end, the first lookup table, M, of Hasan may be employed.

Initially, a processor implementing steps in an example method presented in FIG. 1, receives (step 101) a polynomial, $a(x)$, and a request that the received polynomial be squared. Responsively, the processor obtains (step 102) a result for a squaring operation performed on the polynomial in question, $a(x)$. Upon obtaining a $2n$-1-bit value for the squaring result, $S(x) = a(x)^2$, the processor determines (step 104) whether $n$-1 is divisible by g. If $n$-1 is not divisible by g, then the processor pads (step 106) the squaring result with z zeroes on the left, where $z = g-(n-1) \bmod g$. The processor then initializes (step 108) a counter, $i$, to 1.

Let $l = n - 1 + z$. Then, the length of the squaring result, $S(x)$, becomes $l + n$. The variable $l$ can be used even in the absence of padding, where z = 0. A representation 202 of the squaring result, $S(x)$, is illustrated in FIG. 2. The squaring result 202 includes a first portion 204 that is the most significant g bits, a second portion 206 that is defined as the $n$ bits starting at position $n + l - 1 - g$ and ending at position $l - g$ and a third portion 208 that is the $n - 1 - g$ remaining bits.

If $n$-1 is found to be divisible by g, then the processor proceeds directly to initializing (step 108) the counter. The processor proceeds to reduce the first portion 204 modulo the field polynomial, $f(x)$.

In one embodiment, reducing the first portion 204 modulo the field polynomial involves determining (step 110) a value for an index to the table, M. In particular, the first portion 204 of the squaring result 202 may be employed as an index to the table, M. Given the index, the processor retrieves (step 112) a table entry 310 associated with the determined index value. As discussed in Hasan, where $d$ is the second highest degree of the field polynomial, $f(x)$, the effective size of each table entry is $g + d$ bits. The retrieved table entry 310 is illustrated as a $g + d$ bit value in FIG. 3.

The processor then determines a new $S(x)$, $S_{new}(x)$. Determining $S_{new}(x)$ involves forming (step 113) a sum 312 of the retrieved table entry 310 and the second portion 206 of the squaring result 202 with least significant bits aligned. The forming of the sum 312 is represented in FIG. 3. As mentioned in conjunction with the discussion of FIG. 2, the second portion 206 of the squaring result 202 is defined as the $n$ bits starting at position $n + l - 1$ - g and ending at position $l$ - g.

To determine $S_{new}(x)$ 414, the processor is concatenates (step 114) the third portion 208 to the sum 312, as illustrated in FIG. 4.

The processor then determines (step 116) whether the loop is complete. That is, the processor determines whether $i = \frac{l}{g}$ (recall that $l$ is evenly divisible by g). In the case wherein the loop is not complete, i.e., $i < \frac{l}{g}$, the processor increments the counter (step 118) and repeats the determination of the index (step 110). This time, the index is determined (step 110) as the first portion (g-bits) of $S_{new}(x)$ 414. Also repeated are the retrieval of the table entry (step 112), the forming of a sum (step 113), the concatenation (step 114) and the determination of whether the loop is complete (step 116).

The sum forming and concatenation operations represented in FIGS. 3 and 4, respectively, may be considered in a different, less efficient, way in which the retrieved table entry 310 is shifted to the left $n - 1 - i*g$ bits to created a shifted retrieved table entry and the shifted retrieved table entry is then added to the second portion 206 and third portion 208 of the squaring result 202, i.e., the squaring result 202 truncated to remove the first portion 204.

In general, at the $i^{th}$ iteration, i.e., in the iteration wherein the $i^{th}$ g-bit word is being reduced, the processor adds the entry 310 from the table look-up to the second portion of the squaring result defined as *the n* bits starting at position $l + n - 1 - i*g$ and ending at position $l - i*g$.

FIG. 5 illustrates a mobile communication device 500 as an example of a device that may carry out the method of FIG. 1. The mobile communication device 500 includes a housing, an input device (e.g., a keyboard 524 having a plurality of keys) and an output device (a display 526), which may be a full graphic, or full color, Liquid Crystal Display (LCD). Other types of output devices may alternatively be utilized. A processing device (a microprocessor 528) is shown schematically in FIG. 5 as coupled between the keyboard 524 and the display 526. The microprocessor 528 controls the operation of the display 526, as well as the overall operation of the mobile communication device 500, in part, responsive to actuation of the keys on the keyboard 524 by a user.

The housing may be elongated vertically, or may take on other sizes and shapes (including clamshell housing structures). Where the keyboard 524 includes keys that are associated with at least one alphabetic character and at least one numeric character, the keyboard 524 may include a mode selection key, or other hardware or software, for switching between alphabetic entry and numeric entry.

In addition to the microprocessor 528, other parts of the mobile communication device 500 are shown schematically in FIG. 5. These include: a communications subsystem 502; a short-range communications subsystem 504; the keyboard 524 and the display 526, along with other input/output devices including a set of auxiliary I/O devices 506, a serial port 508, a speaker 510 and a microphone 512; as well as memory devices including a flash memory 516 and a Random Access Memory (RAM) 518; and various other device subsystems 520. The mobile communication device 500 may be a two-way radio frequency (RF) communication device having voice and data communication capabilities. In addition, the mobile communication device 500 may have the capability to communicate with other computer systems via the Internet.

Operating system software executed by the microprocessor 528 may be stored in a computer readable medium, such as the flash memory 516, but may be stored in other types of memory devices, such as a read only memory (ROM) or similar storage element. In addition, system software, specific device applications, or parts thereof, may be temporarily loaded into a volatile store, such as the RAM 518. Communication signals received by the mobile device may also be stored to the RAM 518.

The microprocessor 528, in addition to its operating system functions, enables execution of software applications on the mobile communication device 500. A predetermined set of software applications that control basic device operations, such as a voice communications module 530A and a data communications module 530B, may be installed on the mobile communication device 500 during manufacture. A cryptography module 530C may also be installed on the mobile communication device 500 during manufacture, to implement aspects of the present application. As well, additional software modules, illustrated as another software module 530N, which may be, for instance, a PIM application, may be installed during manufacture. The PIM application may be capable of organizing and managing data items, such as e-mail messages, calendar events, voice mail messages, appointments and task items. The PIM application may also be capable of sending and receiving data items via a wireless carrier network 570 represented by a radio tower. The data items managed by the PIM application may be seamlessly integrated, synchronized and updated via the wireless carrier network 570 with the device user's corresponding data items stored or associated with a host computer system.

Communication functions, including data and voice communications, are performed through the communication subsystem 502 and, possibly, through the short-range communications subsystem 504. The communication subsystem 502 includes a receiver 550, a transmitter 552 and one or more antennas, illustrated as a receive antenna 554 and a transmit antenna 556. In addition, the communication subsystem 502 also includes a processing module, such as a digital signal processor (DSP) 558, and local oscillators (LOs) 560. The specific design and implementation of the communication subsystem 502 is dependent upon the communication network in which the mobile communication device 500 is intended to operate. For example, the communication subsystem 502 of the mobile communication device 500 may be designed to operate with the Mobitex™, DataTAC™ or General Packet Radio Service (GPRS) mobile data communication networks and also designed to operate with any of a variety of voice communication networks, such as Advanced Mobile Phone Service (AMPS), Time Division Multiple Access (TDMA), Code Division Multiple Access (CDMA), Personal Communications Service (PCS), Global System for Mobile Communications (GSM), Enhanced Data rates for GSM Evolution (EDGE), Universal Mobile Telecommunications System (UMTS), Wideband Code Division Multiple Access (W-CDMA), etc. Other types of data and voice networks, both separate and integrated, may also be utilized with the mobile communication device 500.

Network access requirements vary depending upon the type of communication system. Typically, an identifier is associated with each mobile device that uniquely identifies the mobile device or subscriber to which the mobile device has been assigned. The identifier is unique within a specific network or network technology. For example, in Mobitex™ networks, mobile devices are registered on the network using a Mobitex Access Number (MAN) associated with each device and in DataTAC™ networks, mobile devices are registered on the network using a Logical Link Identifier (LLI) associated with each device. In GPRS networks, however, network access is associated with a subscriber or user of a device. A GPRS device therefore uses a subscriber identity module, commonly referred to as a Subscriber Identity Module (SIM) card, in order to operate on a GPRS network. Despite identifying a subscriber by SIM, mobile devices within GSM/GPRS networks are uniquely identified using an International Mobile Equipment Identity (IMEI) number.

When required network registration or activation procedures have been completed, the mobile communication device 500 may send and receive communication signals over the wireless carrier network 570. Signals received from the wireless carrier network 570 by the receive antenna 554 are routed to the receiver 550, which provides for signal amplification, frequency down conversion, filtering, channel selection, etc., and may also provide analog to digital conversion. Analog-to-digital conversion of the received signal allows the DSP 558 to perform more complex communication functions, such as demodulation and decoding. In a similar manner, signals to be transmitted to the wireless carrier network 570 are processed (e.g., modulated and encoded) by the DSP 558 and are then provided to the transmitter 552 for digital to analog conversion, frequency up conversion, filtering, amplification and transmission to the wireless carrier network 570 (or networks) via the transmit antenna 556.

In addition to processing communication signals, the DSP 558 provides for control of the receiver 550 and the transmitter 552. For example, gains applied to communication signals in the receiver 550 and the transmitter 552 may be adaptively controlled through automatic gain control algorithms implemented in the DSP 558.

In a data communication mode, a received signal, such as a text message or web page download, is processed by the communication subsystem 502 and is input to the microprocessor 528. The received signal is then further processed by the microprocessor 528 for output to the display 526, or alternatively to some auxiliary I/O devices 506. A device user may also compose data items, such as e-mail messages, using the keyboard 524 and/or some other auxiliary I/O device 506, such as a touchpad, a rocker switch, a thumb-wheel, a trackball, a touchscreen, or some other type of input device. The composed data items may then be transmitted over the wireless carrier network 570 via the communication subsystem 502.

In a voice communication mode, overall operation of the device is substantially similar to the data communication mode, except that received signals are output to a speaker 510, and signals for transmission are generated by a microphone 512. Alternative voice or audio I/O subsystems, such as a voice message recording subsystem, may also be implemented on the mobile communication device 500. In addition, the display 526 may also be utilized in voice communication mode, for example, to display the identity of a calling party, the duration of a voice call, or other voice call related information.

The short-range communications subsystem 504 enables communication between the mobile communication device 500 and other proximate systems or devices, which need not necessarily be similar devices. For example, the short-range communications subsystem may include an infrared device and associated circuits and components, or a Bluetooth™ communication module to provide for communication with similarly-enabled systems and devices.

The above-described embodiments of the present application are intended to be examples only. Alterations, modifications and variations may be effected to the particular embodiments by those skilled in the art without departing from the scope of the application, which is defined by the claims appended hereto.

## Claims

1. A computer-implemented method, in the field of cryptography, of obtaining a modular product of a $n$-bit polynomial and itself in a field defined by a field polynomial, said method comprising:

   receiving, from a requester, said $n$-bit polynomial and a request for a square of said $n$-bit polynomial;
   representing a squaring result of said $n$-bit polynomial as a $(2n - 1)$-bit polynomial having:

      a first portion that is the most significant g bits of said squaring result;
      a second portion that is the next most significant $n$ bits of said squaring result after said most significant g bits; and
      a third portion that is the remaining bits of said squaring result after removal of said first portion and said second portion;

   reducing said first portion modulo said field polynomial, thereby producing a $(g + d)$-bit reduction, where $d$ is a second highest degree of said field polynomial;
forming a sum of said reduction and said second portion with least significant bits aligned;
assigning, to said squaring result, a concatenation of said third portion to said sum;
repeating said representing, said reducing, said forming and said assigning until said squaring result has a length of *n* bits; and
returning said squaring result.

**2.** The method of claim 1 further comprising defining a table of reductions of g-bit-long polynomials modulo said field polynomial.

**3.** The method of claim 2 wherein said reducing comprises performing a look-up in said table with said first portion of said squaring result as an index.

**4.** The method of any one of claims 1 to 3 further comprising padding said ($2n$ -1)-bit squaring result polynomial with $g$-($n$-1)mod g zeros on the left.

**5.** The method of any one of claims 1 to 4 further comprising selecting g such that a word size, w, of a processor carrying out said method is an integer multiple of g.

**6.** A mobile communication device for encrypting a message comprising a processor adapted to implement the steps of the method of any one of claims 1 to 5.

**7.** A computer readable medium containing computer-executable instructions that, when performed by processor, cause said processor to perform the steps of the method of any one of claims 1 to 6.

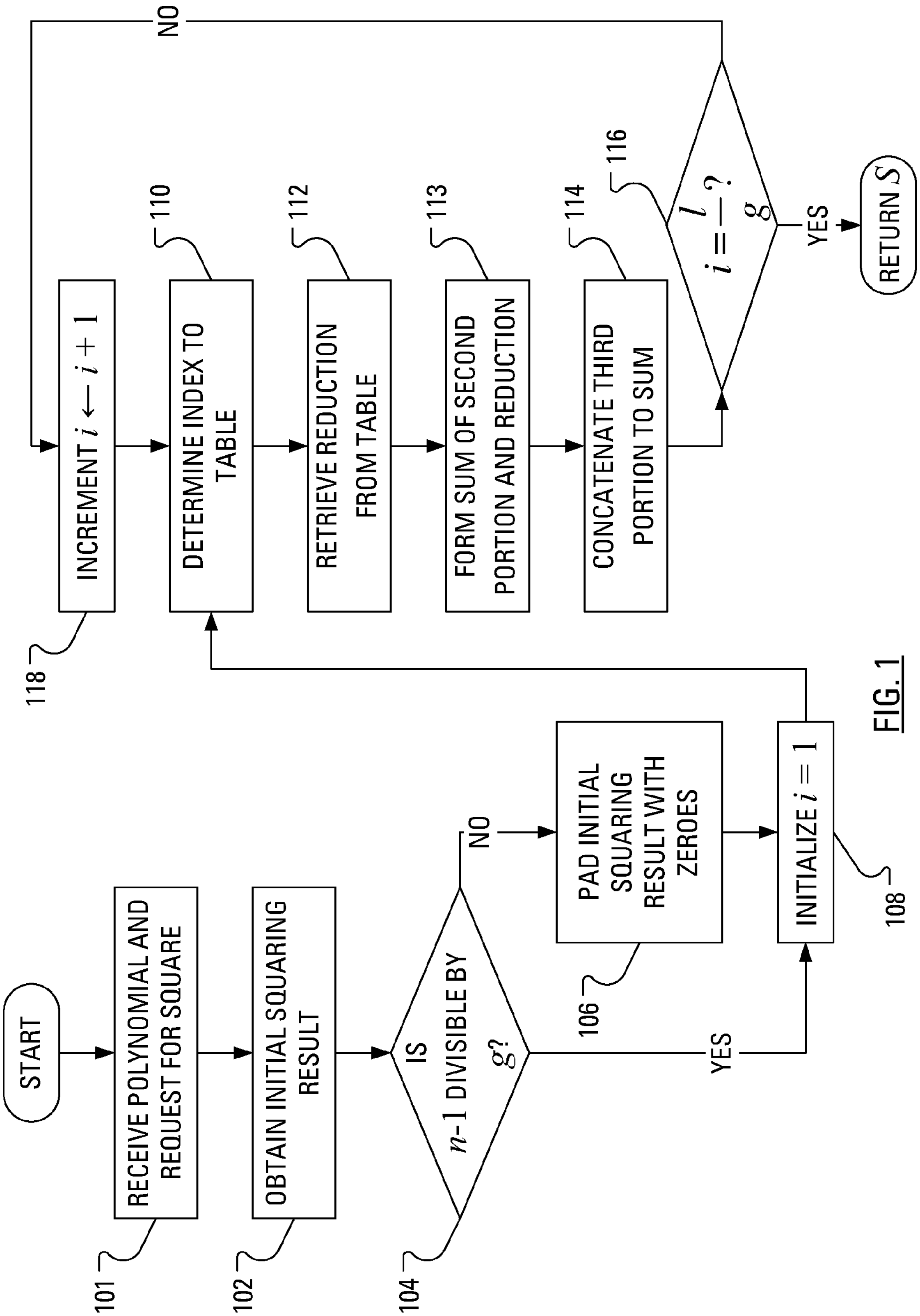
START
RECEIVE POLYNOMIAL AND REQUEST FOR SQUARE
101
OBTAIN INITIAL SQUARING RESULT
102
IS $n$-1 DIVISIBLE BY $g$?
104
NO
YES
PAD INITIAL SQUARING RESULT WITH ZEROES
106
INITIALIZE $i = 1$
108
DETERMINE INDEX TO TABLE
110
RETRIEVE REDUCTION FROM TABLE
112
FORM SUM OF SECOND PORTION AND REDUCTION
113
CONCATENATE THIRD PORTION TO SUM
114
$i = \frac{l}{g}$?
116
YES
RETURN $S$
NO
INCREMENT $i \leftarrow i + 1$
118

FIG. 1

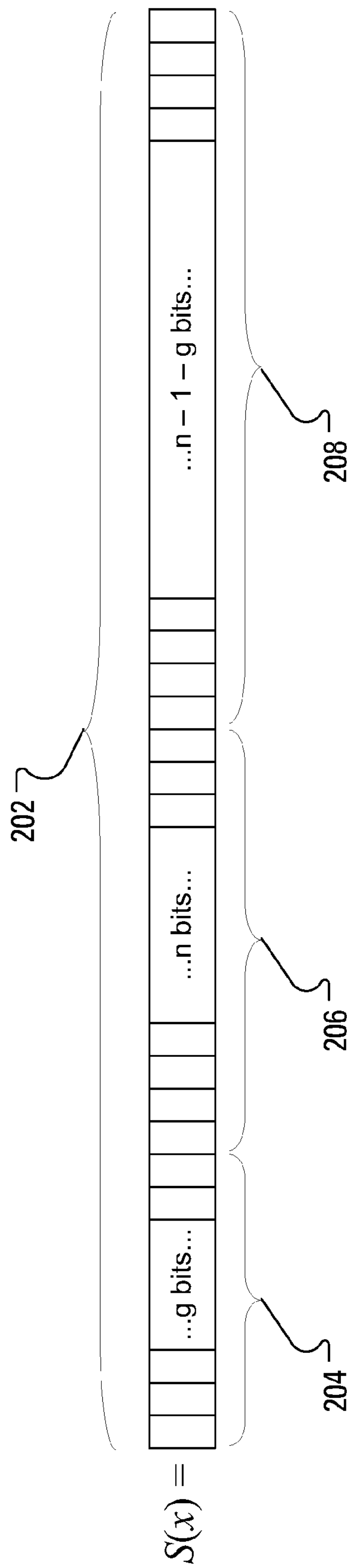


FIG. 2

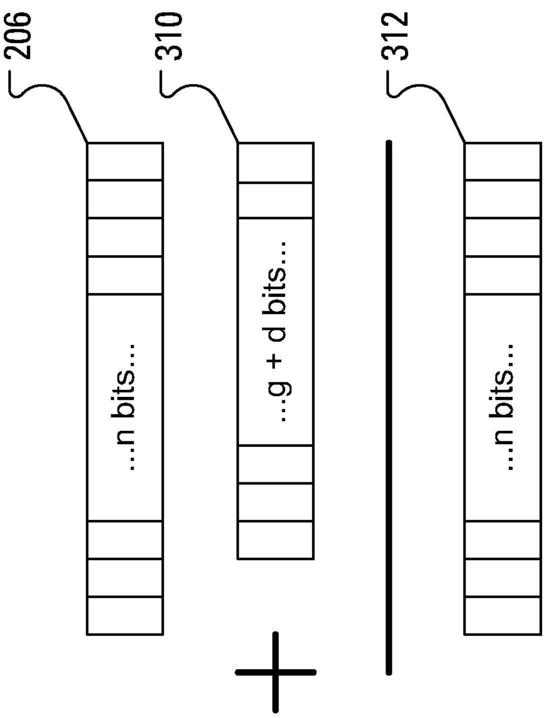


FIG. 3

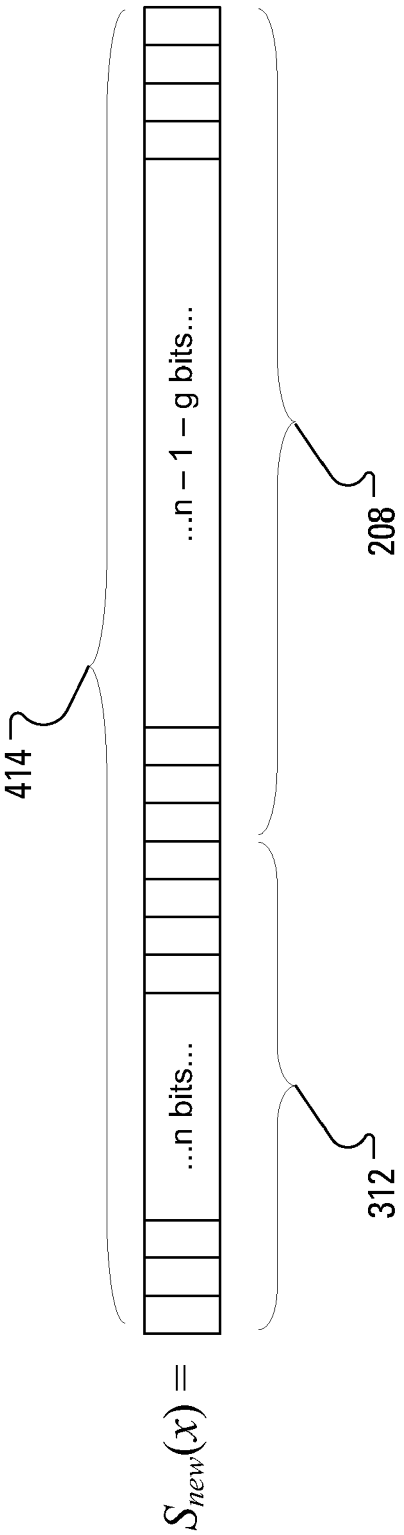


FIG. 4

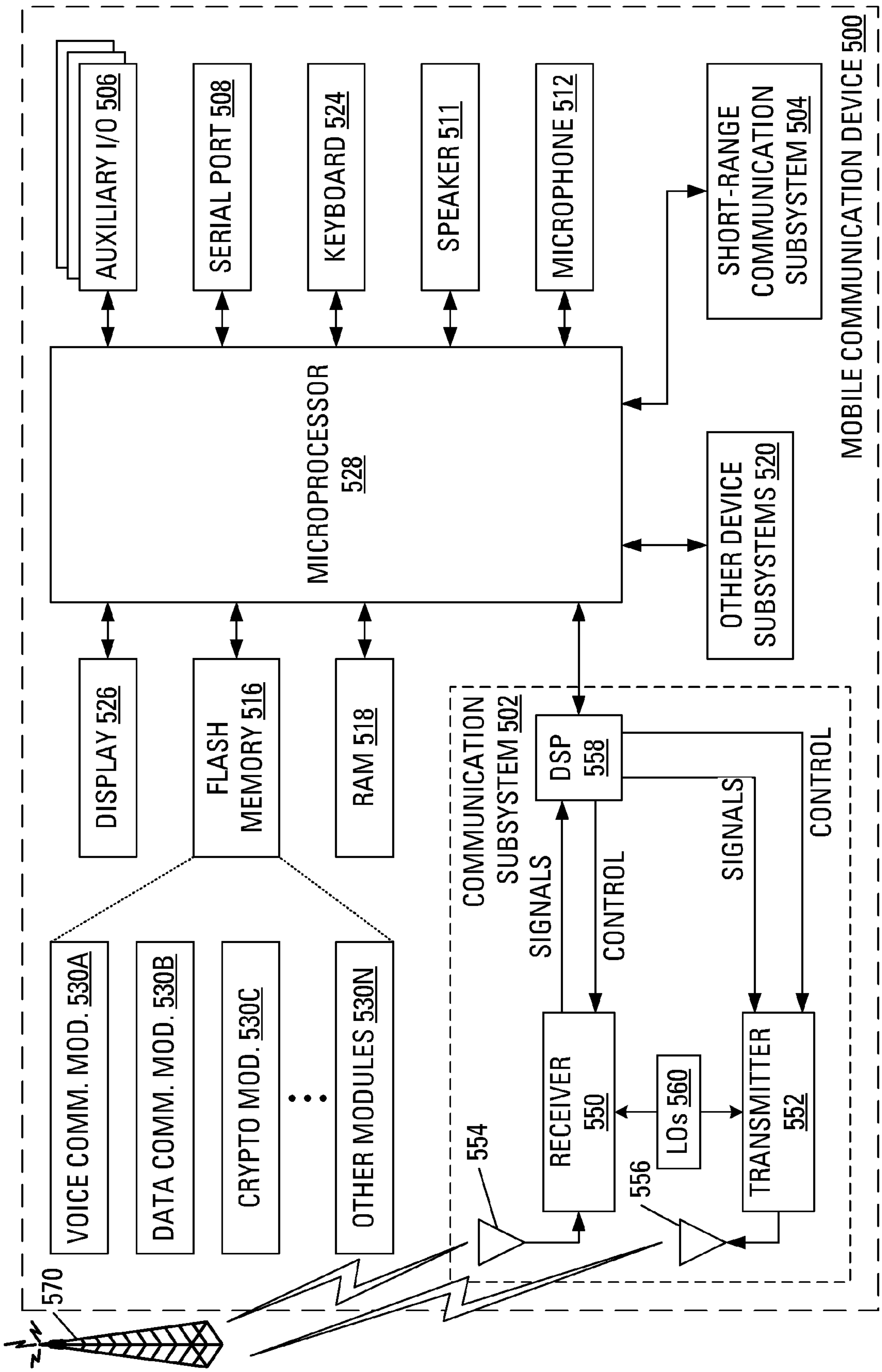
MOBILE COMMUNICATION DEVICE 500
AUXILIARY I/O 506
SERIAL PORT 508
KEYBOARD 524
SPEAKER 511
MICROPHONE 512
SHORT-RANGE COMMUNICATION SUBSYSTEM 504
MICROPROCESSOR 528
OTHER DEVICE SUBSYSTEMS 520
DISPLAY 526
FLASH MEMORY 516
RAM 518
VOICE COMM. MOD. 530A
DATA COMM. MOD. 530B
CRYPTO MOD. 530C
OTHER MODULES 530N
COMMUNICATION SUBSYSTEM 502
DSP 558
SIGNALS
CONTROL
SIGNALS
CONTROL
RECEIVER 550
LOs 560
TRANSMITTER 552
554
556
570

FIG. 5

Europäisches Patentamt
European Patent Office
Office européen des brevets

# EUROPEAN SEARCH REPORT

Application Number
EP 08 16 8129

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (IPC) |
| X<br><br><br><br><br><br><br>Y | SCHROEPPEL R., ORMAN H., O'MALLEY S.: "Fast Key Exchange with Elliptic Curve Systems" THE UNIVERSITY OF ARIZONA, 31 March 1995 (1995-03-31), pages 1-10, XP002473466 Tuczon<br>* abstract *<br>* page 5, paragraph 4.2.1 *<br>* page 5, paragraph 4.3 - page 6 *<br>----- | 1,4-9<br><br><br><br><br><br><br>2,3 | INV.<br>G06F7/72 |
| D,Y | M. ANWARUL HASAN: "Look-Up Table-Based Large Finite Field Multiplication in Memory Constrained Cryptosystems" IEEE TRANSACTIONS ON COMPUTERS, vol. 49, no. 7, 2000, pages 749-758, XP002473467<br>* abstract *<br>* page 751, paragraph 3 - page 752 *<br>----- | 2,3 | |
| A | US 2003/068037 A1 (BERTONI GUIDO [IT] ET AL) 10 April 2003 (2003-04-10)<br>* abstract *<br>* figures 2,3 *<br>-----<br>-/-- | 2,3 | TECHNICAL FIELDS SEARCHED (IPC)<br>G06F |

The present search report has been drawn up for all claims

| Place of search | Date of completion of the search | Examiner |
|---|---|---|
| The Hague | 6 February 2009 | Post, Katharina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

2

EPO FORM 1503 03.82 (P04C01)

Europäisches Patentamt
European Patent Office
Office européen des brevets

# EUROPEAN SEARCH REPORT

Application Number
EP 08 16 8129

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,A | HANKERSON D ET AL: "SOFTWARE IMPLEMENTATION OF ELLIPTIC CURVE CRYPTOGRAPHY OVER BINARY FIELDS" CRYPTOGRAPHIC HARDWARE AND EMBEDDED SYSTEMS. 2ND INTERNATIONAL WORKSHOP, CHES 2000, WORCHESTER, MA, AUG. 17 - 18, 2000 PROCEEDINGS, LECTURE NOTES IN COMPUTER SCIENCE, BERLIN : SPRINGER, DE, vol. VOL. 1965, 17 August 2000 (2000-08-17), pages 1-24, XP001049125 ISBN: 3-540-41455-X * abstract * * page 6, line 16 - page 7, line 5 * * page 7, paragraph 3.3 * ----- | 1-9 | |
| | | | TECHNICAL FIELDS SEARCHED (IPC) |

The present search report has been drawn up for all claims

2

| Place of search | Date of completion of the search | Examiner |
|---|---|---|
| The Hague | 6 February 2009 | Post, Katharina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 08 16 8129

This annex lists the patent family members relating to the patent documents cited in the above-mentioned European search report.
The members are as contained in the European Patent Office EDP file on
The European Patent Office is in no way liable for these particulars which are merely given for the purpose of information.

06-02-2009

| Patent document cited in search report | Publication date | Patent family member(s) | Publication date |
|---|---|---|---|
| US 2003068037 A1 | 10-04-2003 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **M. ANWARUL HASAN.** Look-Up Table-Based Large Finite Field Multiplication in Memory Constrained Cryptosystems. *IEEE Transactions on Computers,* July 2000, vol. 49 (7
- **DARREL HANKERSON ; JULIO LÓPEZ HERNANDEZ ; ALFRED MENEZES.** Software Implementation of Elliptic Curve Cryptography over Binary Fields. *CHES 2000, LNCS,* 1965, 243-267